Europäisches Patentamt

(19) European Patent Office

Office européen des brevets

(11) Publication number: **0 023 432**
A2

(12) **EUROPEAN PATENT APPLICATION**

(21) Application number: 80302583.2

(22) Date of filing: 29.07.80

(51) Int. Cl.³: **B 60 B 33/02**
**B 62 B 3/10**

(30) Priority: 30.07.79 AU 9768/79
05.09.79 AU 344/79

(43) Date of publication of application:
04.02.81 Bulletin 81/5

(84) Designated Contracting States:
AT BE CH DE FR GB IT LI LU NL SE

(71) Applicant: Fisher, Norman Anthony
129 Ironbark Road
Diamond Creek 3089 Victoria(AU)

(72) Inventor: Fisher, Norman Anthony
129 Ironbark Road
Diamond Creek 3089 Victoria(AU)

(74) Representative: Bowman, Paul Alan et al,
LLOYD WISE, TREGEAR & CO. Norman House 105-109
Strand
London WC2R OAE(GB)

(54) **Castors.**

(57) A castor comprising a support (4) adapted to carry a wheel (3) for rotation about a generally horizontal axis (41) and wherein the support is adapted to turn about a castor axis (2) and including means (24) adapted to releasably lock the support against turning about the castor axis.

FIG. 2.

EP 0 023 432 A2

CASTORS

1.

This invention relates to wheels. In one aspect it relates to castor wheels. In another aspect it relates to a shopping trolley such as a supermarket trolley.

Applicant has observed a first problem that supermarket trolleys fitted with rear castor wheels having an axis of wheeling rotation which can turn, with respect to the trolley, about a vertical axis are hard to steer.

Applicant has also observed that supermarket trolleys fitted with rear wheels which are fixed in the sense that the axis of wheeling rotation cannot turn, with respect to the trolley, about a vertical axis are quite easy to steer.

Applicant has also observed a second problem that it is the practice to make a horizontally extending nest of such trolleys and that when such a nest is formed the nest, as a whole, is nigh on impossible to steer if the rear wheels of the trolleys are fixed as aforesaid but is more easily steered if the rear wheels of the trolleys can turn as aforesaid.

Accordingly, the present invention provides a castor having a wheel and having means adapted to releasably lock the wheel against turning about the castor axis.

Said means is preferably biased to a

2.

condition in which it can lock the wheel as aforesaid and thus to unlock the wheel in this instance it would be necessary to move said means against the bias. The bias is preferably a bias provided by gravity. Thus, in a preferred instance will normally move under gravity to a condition in which it can lock the wheel as aforesaid and unlocking requires lifting of said means.

In a particularly preferred instance, said means comprises a latch comprised of a first latch part carried by means extending on said castor axis and a second latch part carried by, or forming part of, a support for said wheel, which support being rotatable about said castor axis. Said means extending on said castor axis may be an axle about which said support is rotatable.

The first latch part preferably comprises a projection which is mounted to said means extending on said castor axis to pivot about a generally horizontal axis and which is biased to a down position by gravity but which can be moved to an up position against gravity. That movement may be effected in one instance by lifting the pin on the pin side of said axis or by downward movement of an extension extending to the other side of said axis. The second latch part preferably comprises an aperture forming part of, or carried by, said support into which the pin can enter when the support is in a .particular angularly rotated orientation about the castor axis.

The invention, as described above, can be applied to shopping trolleys to at least in part overcome the first mentioned problem and in this respect the present invention provides a shopping trolley or supermarket trolley provided with such a castor wheel. It is preferred that the castor wheel of the invention is used as a rear wheel for the trolley and, further, that two castor wheels in accordance with this invention are used as two rear wheels for the trolley.

To at least in part overcome the second problem mentioned above said means adapted to releasably lock preferably comprises an abutment capable of being abutted against and moved to put said means adapted to releasably lock in the unlocked condition.

Such abutting against is preferably provided by another shopping or supermarket trolley in a nest of such trolleys.

Thus, the present invention also provides a shopping or supermarket trolley provided with a castor in accordance with this invention and having said abutment and constructed and arranged such that nesting of another trolley within that trolley will cause movement of the abutment as aforesaid.

The construction is preferably such that in a nest of a plurality of such trolleys all but the most rearward of the trolleys will be in a condition in which their wheels can turn about their castor axes.

A specific construction of a castor and a shopping or supermarket trolley in accordance with this invention will now be described with the aid of the accompanying drawings in which:-

Figure 1 is a perspective view of a supermarket trolley to which the castor is fitted,

Figure 2 is a perspective view of part of the trolley showing the castor in greater detail,

Figure 3 is a cross-section on line 3-3 in Figure 2,

Figure 4 is a side elevation of part of a number of trolleys,

Figure 5 is a perspective view of an alternative trolley to which the castor is fitted, and

Figure 6 is a side elevation of a number of such alternative trolleys.

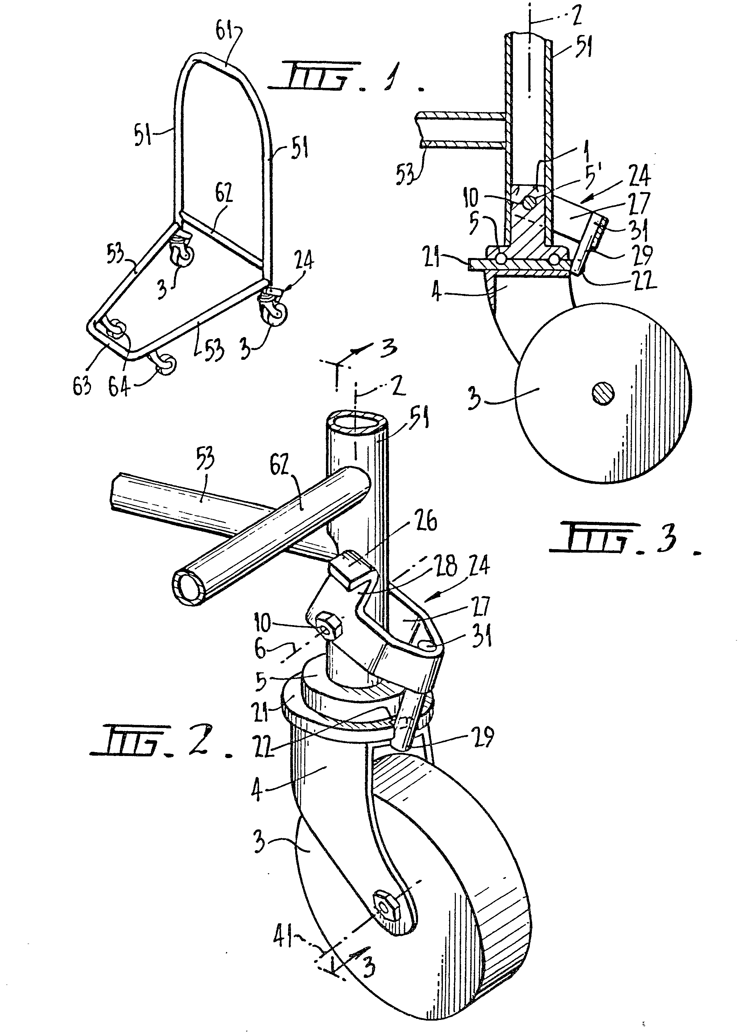

The trolleys shown in Figure 1 comprises vertical tube portions 51 to which castors in accordance with invention are fitted, a handle 61 and a cross-bar 62 all of which are at the rear or pushing end of the trolley, and an under carriage comprising forwardly extending tube portions 53 and a front tube portion 63. The tube portions 53 taper towards one another towards the front tube portion 63 and support conventional castors 64 which are free to rotate about their castor axes at all times.

The castors in accordance with this invention fitted to the tube portions 51 comprise an axle 1 which defines a castor axis 2, a wheel 3, a wheel support 4 and a bearing 5 connecting the wheel support 4 and axle 1 to enable the wheel support 4 to turn around the castor axis 2. The castor also comprises a bore 5 on the axis 6 and, in use, the axle is fitted into the tube portion 51 of the trolley and a bolt 10 or other means is passed through holes in the tube and said bore 5 to secure the castor to the tube portion 51.

As described above, the castors in accordance with this invention are conventional.

However, fitted to the support 4 is an annulus 21 having a notch 22 therein. Further, the bolt 10 extends through said bore 5 and supports a latching

5.

means 24 for pivotal movement about the bolt 23.

The latching means 24 comprises a member 27 which is pivoted about the bolt 10 and which has an abutment 26 and a high part at 28 and a pin 29 which can locate in the notch 22. If desired weight can be located at 31 to ensure adequate gravity bias on pin 29.

In use gravity will tend to cause the pin to move down and, when the annulus 21, which is secured to the support 4, comes to the correct angular orientation about the castor axis 2 the pin 29 will drop into the notch 22 to thereby prevent turning of the support about the castor axis.

Thus, when two of the castors described above are fitted as the rear wheels of the shopping or supermarket trolley the rear wheels will automatically lock and will not turn about the castor axis. Naturally, the castors are secured to the trolley so that the lock position is one in which the axis of rotation, 41 in Figure 1, is transverse to a fore-aft line of the trolley.

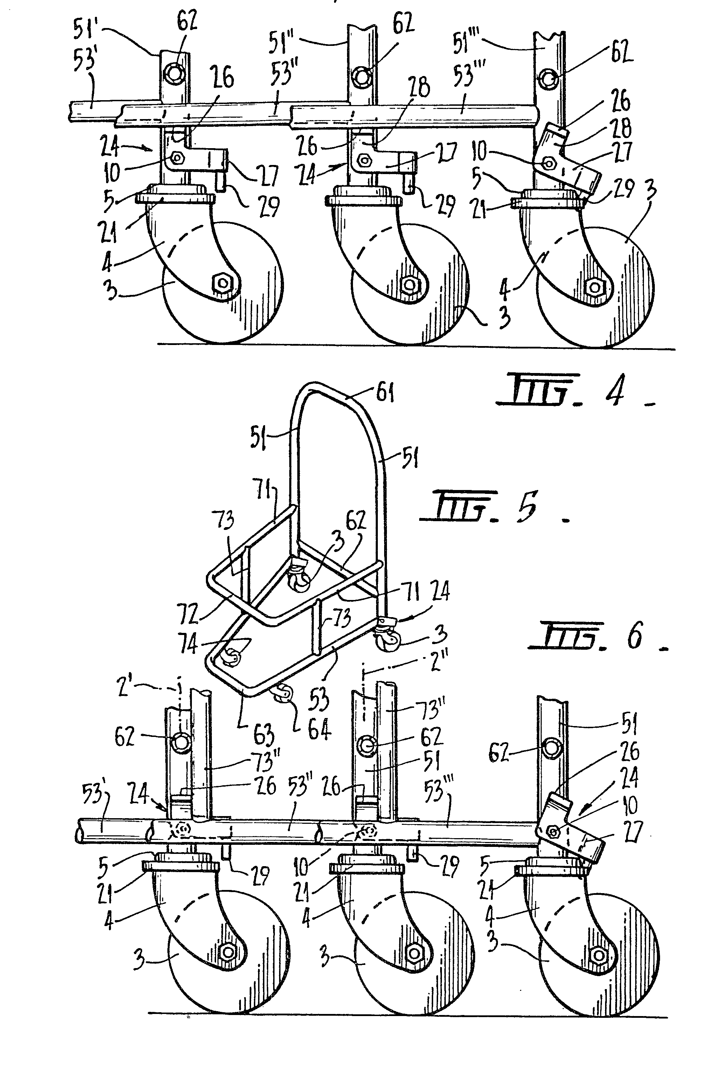

When two such trolleys are fitted with the above described castors the arrangement is preferably such that when the trolleys are nested part of one trolley will push the high part 28 down to raise the pin 29 out of the notch 22 and thus permit turning of the support 4 about the castor axis. Thus, the member 27 for the left one of the tube portions 51 will be the mirror image of what is shown in Figures 2 and 4. However, it is preferred that the most rearward one of any nest of trolleys retains its rear in the lock position.

6.

This last is illustrated in Figure 4 in which parts of several trolleys are shown. Those parts are vertical tubes 51', 51" and 51"' to which the castors in accordance with this invention are fitted and undercarriage members 53', 53" and 53"'. It should be noted that the undercarriage members 53" and 53"' have, in nesting, pushed down the high part 28 of the means 24 of the castor fitted to tubes 51' and 51" whereas the castor fitted to tube 51"' remains in the lock position.

Thus, the castor described above should at least in part overcome problems associated with shopping or supermarket trolleys.

The alternative trolley shown in Figure 4 is similar to that shown in Figure 1 and like numerals refer to like parts. However, the trolley also includes forwardly extending tube portions 71, a front tube portion 72 and a support 73 all of which are useful in supporting a shopping basket or other object or objects.

Further, the support 73 is useful in operating the latching means 24 and in this respect reference is made to Figure 6 where several trolleys are shown; the two to the right having supports 73" and 73"' which, in the process of nesting with the trolley to their immediate left with respect to Figure 6, have been brought into abutment with the abutment 26 to turn the member 27 about the bolt 10 to lift the pin 27 out of the notch 22 to free the respective wheels 3 to turn about their castor axes 2' and 2" whereas the wheel 3 which relates to castor axis 2"' is not free to turn about that axis.

Alternative constructions of castors in accordance with this invention are described in the specifications of Australian Patent Applications No's. PD 9768 and PE 0344 and the whole of the subject matter thereof is to be considered to be imported hereinto. Those alternative constructions are minor

7.

modifications of the above described and do not act substantially differently.

The present invention may also be applied to castors of the spherical, ball or shepherd type.

Modifications and adaptations may be made to the above described without departing from the spirit and scope of this invention which includes every novel feature and combination of features disclosed herein.

CLAIMS:

1.

1.      A castor comprising a support adapted to carry a wheel for rotation about a generally horizontal axis and wherein the support is adapted to turn about a castor axis and including means adapted to releasably lock the support against turning about the castor axis.

2.      A castor having a wheel and having means adapted to releasably lock the wheel against turning about the castor axis.

3.      A castor as claimed in claim 2, wherein said means is biased to a condition in which it can lock the wheel as aforesaid and against which bias said means can be moved to unlock the wheel against said turning.

4.      A castor as claimed in claim 3, wherein said bias is provided by gravity.

5.      A castor as claimed in any one of claims 2 - 4, wherein said means comprises a latch comprised of a first latch part carried by means extending on said castor axis and a second latch part carried by or forming part of, a support for said wheel, which support being rotatable about said castor axis,

6.      A castor as claimed in claim 5, wherein the first latch part comprises a projection which is mounted to said means extending on said castor axis to pivot about a generally horizontal axis and which is biased to a down position by gravity but which can be moved to an up position against gravity and the second latch

2.

part comprises an aperture forming part of, or carried by, said support into which the pin can enter when the support is in a particular angularly rotated orientation about the castor axis.

7.      A shopping or supermarket trolley comprising a castor having a wheel and having means adapted to releasably lock the wheel against turning about the castor axis; and wherein said means includes an abutment capable of being abutted against and moved to put said means adapted to releasably lock in the unlocked condition.

8.      A shopping or supermarket trolley as claimed in claim 7 and constructed and arranged such that nesting of another such trolley within that trolley will cause movement of said abutment as aforesaid.

9.      A shopping or supermarket trolley as claimed in claim 8, wherein said another such trolley has a frame part adapted to abut against said abutment to cause movement of said abutment as aforesaid.

FIG. 1.

FIG. 2.

FIG. 3.

0023432

FIG. 4.

FIG. 5.

FIG. 6.